# EUROPEAN PATENT SPECIFICATION

(11) **EP 2 619 509 B1**
(45) Date of publication and mention of the grant of the patent: **30.10.2019**
(21) Application number: 11827049.5
(22) Date of filing: 07.09.2011
(51) Int. Cl.: F24D 11/00, F28D 20/00

(54) **SYSTEM FOR STORING THERMAL ENERGY, HEATING ASSEMBLY COMPRISING SAID SYSTEM AND METHOD OF MANUFACTURING SAID SYSTEM**
SYSTEM ZUM SPEICHERN VON WÄRMEENERGIE, HEIZUNGSANORDNUNG MIT DIESEM SYSTEM UND VERFAHREN ZUR HERSTELLUNG DIESES SYSTEMS
SYSTÈME POUR STOCKER DE L'ÉNERGIE THERMIQUE, ENSEMBLE DE CHAUFFAGE COMPRENANT LEDIT SYSTÈME ET PROCÉDÉ DE FABRICATION DUDIT SYSTÈME

(30) Priority: 20.09.2010 SE 1050975
(43) Date of publication of application: 31.07.2013
(73) Proprietor: AB Svenskt Klimatneutralt Boende, 517 37 Bollebygd (SE)
(72) Inventor: ESKILSBY, Jan-Erik, S-517 37 Bollebygd (SE)
(74) Representative: Jansson Hjerdt, Emma
(86) International application number: PCT/SE2011/051079
(87) International publication number: WO 2012/039662

(56) References cited:
- WO-A1-2010/041961
- WO-A2-2007/121732
- DE-A1- 2 238 611
- DE-A1- 2 704 938
- DE-A1- 2 828 675
- DE-A1- 2 948 417
- DE-A1- 3 009 990
- DE-A1- 3 009 990
- DE-A1- 4 341 858
- DE-A1-102008 041 715
- DE-U1-202006 011 482
- FR-A1- 2 353 021
- GB-A- 1 563 076
- US-A- 3 339 629
- US-A- 4 000 851
- US-A- 4 194 496
- US-A- 4 321 962
- US-A- 4 361 135
- US-B1- 6 220 339
- CABERO, M.: 'Solenergiåret om' GÔTEBORGS FRIA 28 November 2009, pages 4 - 5, XP055143434

## Description

### TECHNICAL FIELD

The present invention relates to a storage system for storing thermal energy for use in heating a building, according to the preamble of claim 1. Such a storage system is known e.g. from WO 2007/121732 A2.

### BACKGROUND ART

The manufacture and use of energy efficient buildings is increasing and provides a convenient and environmental friendly way of living. Often, thermal energy is produced by the use of solar panels on a roof of the building and the energy is transmitted to heating devices such as radiators, underfloor heating or a ventilation system to provide a suitable indoor climate. During some periods of warm and sunny weather, substantially more thermal energy than required can however be produced while during cold and overcast or snowy periods the solar panels produce very little energy that is not sufficient for heating the building. The need for an efficient storing system for storing thermal energy and retrieving it when required is therefore apparent.

Such storing systems are for instance shown by US4138995 (Yuan), US4184477 (Yuan) and by JP 2004169977 (Taisei Corp.) where thermal energy can be directed into a layer of wet sand or earth and be retained there by insulation, or be directed into a tank placed in the ground. These systems have the drawbacks, however, that the stored energy can seep into surrounding or that the tanks used will require maintenance that is difficult to perform due to the fact that the equipment is buried in the ground.

GB 1563076 discloses a storage system for storing thermal energy in a layer of a material, but the system is of a complicated construction with excessive insulation and requires energy dissipation within the layer for extracting energy, which is inefficient and potentially costly.

US4321962 discloses a similar storage system but is only suitable for short time storage due to its limited dimension, and also has a risk of condensation forming on the hose transporting fluid, thus significantly reducing the capacity of the storage system.

DE 2704938 discloses a system for storing energy, but requires massive insulation to prevent energy leakages, as does WO2010041961.

US 2009/0101303 discloses a device of a water heat accumulator or storage medium that is composed of water and at least one solid construction material which has a structure with hollow spaces and is specifically designed to absorb the entire amount of water and autonomously retain as much thereof as possible, has a statically load-bearing structure and can thus accommodate a superstructure, and can have water-permeable and/or hygroscopic properties. All additional equipment required for operating and utilizing the heat accumulator is assigned to said water heat accumulator or storage medium. The device is characterized in that the construction material is a foam product or a construction material which is composed of several identical and/or different solid construction materials that are fixedly interconnected.

Also, none of the systems above is suitable for use with a heat pump or air conditioning system, which significantly reduces their efficiency in heating or cooling a building.

The requirement for a more efficient system for storing thermal energy without the need for maintenance is therefore apparent.

### DISCLOSURE OF THE INVENTION

The object of the present invention is to eliminate or at least to minimize the problems mentioned above. This is achieved through a storage system for storing thermal energy according to the appended claim 1, wherein a cavity of the system comprises a stone dust material that is arranged to cover at least two hoses for transporting a fluid. Thereby, thermal energy can be conveniently stored in the storage system and thanks to the properties of the stone dust material it can be retained inside the storage system without leaking into surrounding areas. Also, thanks to the configuration of the storage system, only the top surface of the cavity requires an insulating layer to prevent a leakage of thermal energy from the storage system. On the side and bottom surfaces, the heat retaining properties of the storage system keep the thermal energy safely inside the system without the need for a separate insulating layer.

According to the invention said at least two hoses are placed in an essentially two-dimensional spiral pattern in said cavity. Thereby, the thermal energy can be concentrated to an area in the centre of the storage system and the risk for a leakage decreased.

According to the invention, at least one of the at least two hoses is a storage hose that is arranged to transport thermal energy into the system and at least one other being a retrieval hose that is arranged to transport thermal energy from the system. Thereby, thermal energy can be loaded into the storage system at the same time as energy is also retrieved, making it possible to use the energy for heating a building without requiring interruption for storage. Dimensions of the hoses can also be adapted to what is beneficial for storing and retrieval, respectively.

According to the invention, said at least two hoses (71, 72) are placed at essentially the same distance from the top surface (14) of the cavity (11). Thereby, retrieval of thermal energy can be performed efficiently since the retrieval hose is located centrally in the storage system near the storage hose.

A heating assembly for a building comprising a storage system according to the invention is also provided. Thereby, a complete system with energy production, storage, retrieval and use can be provided, keeping consumption of external energy from a grid, for instance, to a minimum.

Many other advantages and aspects of the invention are described below and will become apparent to the person skilled in the art.

### BRIEF DESCRIPTION OF THE DRAWINGS

The invention will now be described in more detail with reference to the appended drawings, wherein:
Fig. 1 shows a schematic view of a heating assembly for a building, comprising a storage system for storing thermal energy according to a preferred embodiment of the present invention;
Fig. 2 shows a schematic view from the side of the storage system of Fig. 1;
Fig. 3 shows a schematic view from above of a preferred placement of hoses in the storage system of Fig. 2; and
Fig. 4 shows a hemispherical shape of a storage unit created inside the storage system of Fig. 2.

### DETAILED DESCRIPTION OF THE INVENTION

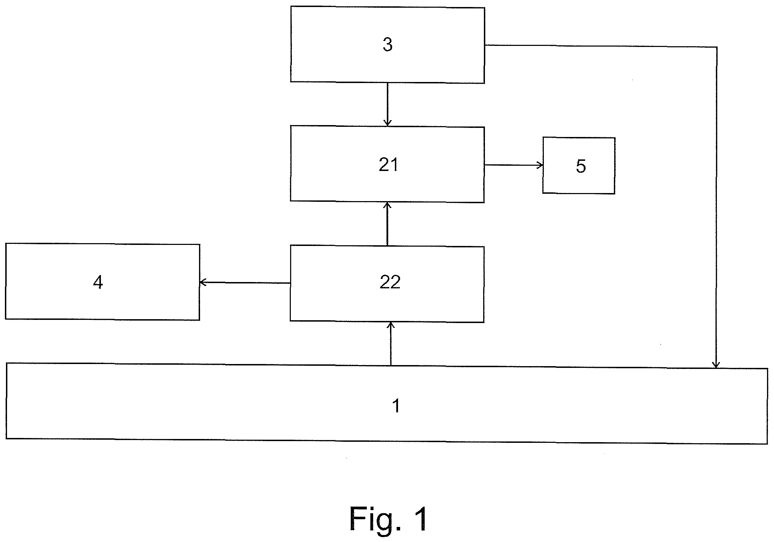

In Fig. 1, a heating assembly 2 for use in heating a building or similar structure can be seen. Through means for producing thermal energy 3 such as solar panels 3, thermal energy can be captured and entered into a water storage unit 21 for short term storage or for direct use in a tap 5 for extraction of hot water for the benefit of a person present in the building. Means for distributing thermal energy 22, such as a heat pump 22 is connected to the water storage unit 21 and also to a storage system 1, preferably placed in the ground underneath the building. Further, the heat pump 22 is connected to a heating system 4 for heating the building through radiators, underfloor heating or ventilation, for instance.

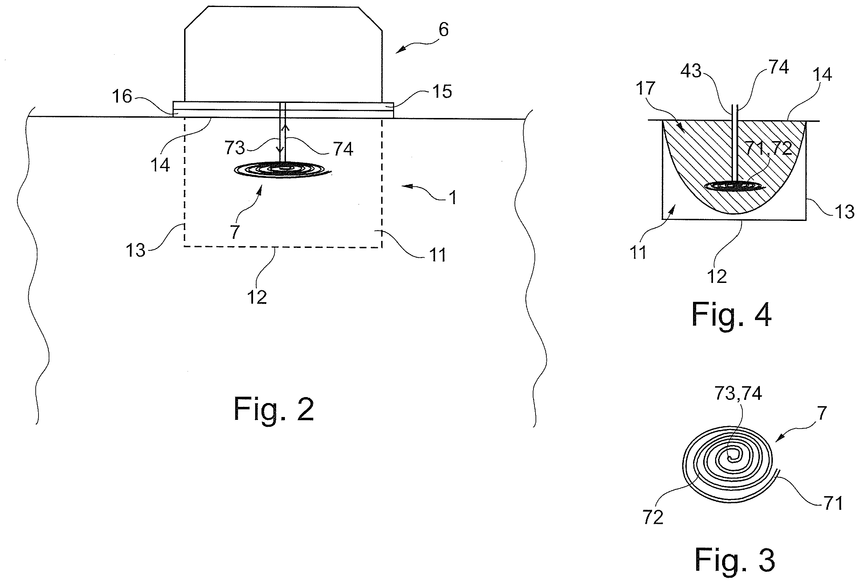

Fig. 2 shows a view from the side of the storage system 1 for storing thermal energy according to a preferred embodiment of the invention, where said storage system 1 is located in the ground beneath a building 6. The storage system 1 comprises a cavity 11 with a bottom surface 12, side surfaces 13 and top surface 14, and the top surface 14 is covered by an insulating layer 15. In the cavity 11, at least one hose 7 connected to the heating assembly 2 described above is placed, with a heat storage conduit 73 that allows for thermal energy to be inserted into the storage system 1 and a retrieval conduit 74 that allows for said thermal energy to be removed and used in the heating assembly 2. Surrounding the hose 7, a stone dust material is placed and fills essentially all available space within the cavity 11 so that the hose 7 is embedded. A plurality of hoses 7 are used with the invention, so that a separate storing hose 71 is used for storing thermal energy and another hose, a retrieving hose 72, is used for retrieving said thermal energy. The storing hose 71 is in this embodiment connected to the heat storage conduit 73 and the retrieving hose 72 to the retrieval conduit 74.

Fig. 3 shows a view from above of the placement of the hoses 71, 72, where a double spiral pattern is created. The conduits 73, 74 are placed in a centre of the spiral in this preferred embodiment.

A method of manufacturing the storage system 1 will now be described according to a preferred embodiment of the invention.

In a first step, a cavity 11 is created in the ground in a location where a building 6 is later to be built, or in the vicinity of an existing building. Said cavity 11 is in a preferred embodiment at least about 2 m deep and covers approximately the same area as the building 6 is intended to. If bedrock is encountered at a suitable depth, it can constitute a bottom surface 12 and can thereby provide an additional thermal storage volume, thanks to the good heat storage properties of bedrock. It also prevents ground water from seeping into the storage system 1. If no bedrock is encountered, a bottom surface 12 is created from any materials encountered while making the cavity 11, such as earth or sand. Side surfaces 13 are also created, essentially by digging the cavity 11 sharply downwards to that a wall is created from the earth in the vicinity of the cavity 11.

After the cavity 11 has thus been created, in a second step a stone dust material is placed into the cavity 11 to create a first stone dust layer of a depth of at least about 0,5 m. At a surface of this first stone dust layer, hoses 71, 72 are placed in a third step in the spiral pattern described above and shown by Fig. 3, with the conduits 73, 74 being attached to the hoses 71 and 72, respectively, and extending vertically upwards towards. The hoses 71, 72 can be fixated by a metal net to keep them in a horizontal plane without the risk for vertical displacements that would cause bends in the hoses 71, 72 and increase a risk for wear and tear. Around and above the hoses 71, 72, a second stone dust layer is placed in a fourth step to fill any space left in the cavity 11, i.e. to a depth of 1,5 m of the second stone dust layer, to arrive at ground level. On top of the second stone dust layer, a top surface 14 of the cavity is created and a third layer 16 of crushed rock and an insulation layer such as 250-400 mm of Styrofoam is placed above the third layer in a fifth step. After the storage system 1 has thus been completed, the building 6 can be built on top of the insulation layer 15. The conduits 73, 74 are allowed to protrude through all layers of material placed above the hoses 71, 72 and into the building 6 to be connected to the heating assembly 2. Thanks to a small particle size of the stone dust, the hoses 71, 72 are held securely without movement in relation to the storage system 1 and thus wear and tear to the hoses 71, 72 can be kept at a minimum. The thermal energy stored in the stone dust can also be kept securely and stably with a very low risk for leakage to the surrounding earth. Even if movements should occur in the ground around the storage system 1, such as vibrations from heavy vehicles passing nearby for instance, the stone dust will prevent any such vibrations from causing damage to the storage system 1.

The stone dust material used can be created from particles left over when crushing rock and stone for other purposes, such as road construction or gravel preparation, and can be an essentially dry material with particles having a diameter of 0-3 mm. The stone dust material has good heat retaining properties and will to a high degree prevent a leakage of thermal energy. Thanks to this very beneficial property, essentially no insulation is needed along the bottom surface 12 and side surfaces 13.

When the storage system 1 is charged with thermal energy, a storage unit of an essentially hemispherical shape is created in the stone dust material due to the energy spreading out in all directions from the storing hose 71, where said hemisphere has a circular area approximately parallel with the top surface 14 and a radius extending vertically from the top surface 14 to the bottom surface 12, as shown by the area 17 with dashed lines in Fig. 4.

The insulation layer 15 and third layer 16 thus provide an insulation upwards to keep most of the thermal energy stored in the storage system 1 safely inside the system 1. Any leakage through the layers 15, 16 will, however, seep up into the building 6 and serve to warm floors inside the building 6 to the benefit of its inhabitants. This will occur during periods of time when a large amount of energy is stored inside the storage system 1, i.e. during warmer periods such as summer when a high amount of energy can be captured by the solar panels 3.

It is beneficial that the insulation layer 15 and third layer 16 extend over a larger area than that of the top surface 14 of the cavity 11, to prevent any leakage around the edges of the top surface 14 during cold periods, i.e. to prevent that a winter's cold seeps into the storage system to decrease storage capacity. A distance of 1,5-2 m may be suitable for the preferred embodiment described here.

It is beneficial if the storage hose 71 comprises a plurality of hoses 711 placed close together in the spiral pattern, preferably 4-8 hoses 711, since this facilitates an efficient storage of the thermal energy. Suitable dimensions for the storage hoses 711 may be 22-28 mm x 100 m. Preferably, a closed loop is created for the storage hoses 711, where a pump (not shown) can be used to pump a fluid contained inside said hoses 711, such as water with an anti-freeze agent, from the heating assembly 2 where the fluid can be heated by the energy captured by the solar panels 3 and down through the storage conduit 73 and outwards in the spiral pattern. When confronted with the storage system 1, the fluid will gradually cool while the area around the hoses 711 will be heated by thermal energy being transferred from the fluid and out into the stone dust material. The area at the centre of the storage system 1 will have the highest temperature, with the periphery of the storage system 1 being cooler.

Similarly, the retrieval hose 72 can be a plurality of hoses but is in this preferred embodiment only one hose 72, with dimensions 40 mm x 400 m and containing a brine fluid. A pump can be used for pumping this fluid along a closed loop as well but from the periphery of the spirals and towards the centre, where the brine fluid will gradually be heated and transported into the building 6 by the retrieval conduit 74 for use with the heat pump 22.

The temperature inside the storage system 1 is kept relatively low, ranging in the interval 6-22°C for a storage system 1 located underneath a building 6. Thanks to this fact, a heating effect can be achieved even during cold winters as long as the sun is shining on the solar panels, since the fluid used for charging will only have to be warmed slightly to be able to transport thermal energy into the storage system 1. The stone dust material, apart from preserving the thermal energy within the storage system 1, also serves to prolong the life of the hoses 71, 72, 711 by providing a secure embedding with small particles that will prevent the wear and tear that would be caused by larger or pointed objects such as larger gravel, for instance. The temperature inside the building 6 is kept higher than the temperature inside the storage system 1, which is very beneficial in preventing condensation to form on the conduits 73, 74 leading down into the storage system 1. The minimum suitable temperature for underfloor heating, for instance, is thus 22°C, ensuring that this temperature is higher than that inside the storage system 1.

In the event that the storage system 1 is to be used with a pre-existing building, the beneficial effect of using any leakage of thermal energy for heating floors inside the building can of course not be utilized. Instead, a thicker insulation layer can be used along the top surface 14 of the cavity 11 to minimise leakage, and the temperature inside the storage system 1 can be allowed to be higher than the temperature inside the building. In this embodiment, conduits 73, 74 generally enter the building through a wall to reach the heat pump 22 rather than through a floor such as when the storage system 1 is placed directly below the building.

The use of the storage system 1 and the heating assembly 2 will now be described in more detail.

In order to provide heating for a building and for hot water used within said building, solar panels 3 are provided, preferably placed on a roof at a suitable angle to catch as much sun as possible. A slant of 20-40° may be suitable in a Nordic climate. The energy captured by the solar panels 3 is transferred to the water storage unit 21 and is used to heat an amount of water stored there. A suitable amount for a residential building can be 200-900 liters of water. Inhabitants of the house can use water from the water storage unit 21 for washing, showering or other regular water consuming activities. The water in the hot water tank is kept at a suitable temperature, for instance in the range of 55-90°C, and the tank is preferably insulated in such a way that the hot water can be kept hot for several days if no additional energy is added, such as for instance on several subsequent overcast winter days. As long as the sun is shining, however, the thermal energy is used to heat the hot water until a preset temperature has been reached, and any excess energy is stored as is described below.

Any excess energy produces by the solar panels 3 is transferred into the storage system 1 and kept underground to be used for heating the house when such a need arises. The storage is effected by water heated by the solar panels 3 being led into the storage hose 71 of the storage system 1 along the storage conduit 73, going down to a suitable depth in the storage system 1 and heat being transferred through a wall of the storage hose 71 into the stone dust material surrounding the hoses 71, 72. Thanks to the spiral pattern, the water inside the storage hose 71 will gradually cool off as it travels outwards in the spiral, keeping a majority of the thermal energy in the stone dust placed centrally underneath the building 6. Preferably, the storage hose 71 constitutes a closed loop with an outer end of the spiral being led back up into the building 6 and into contact with energy produced by the solar panels 3.

For retrieving the energy stored in the storage system 1, one or more retrieval hoses 72 are distributed in a similar spiral pattern as the storage hose 71 and on approximately the same depth. The flow is directed from a perimeter of the spiral towards the centre, where the retrieval conduit 74 is located. Thanks to this preferred placement, a fluid contained within the retrieval hoses 72 can be successively heated by the passage through the storage system 1 to arrive at a maximum temperature at the centre of the spirals. The retrieval conduit 74 is connected to the heat pump 22 that serves to heat the building 6 through underfloor heating, radiators or the like, and also serves to heat the water in the water storage tank 21, if needed.

Thus, the thermal energy captured by the solar panels 3 is continuously transferred to the storage system 1 for storage unless it is used for heating the hot water inside the water storage tank 21, and at the same time thermal energy is continuously being retrieved by the heating assembly from the storage system 1. The process of storing energy and the process of retrieving said energy can be performed at the same time.

In the event that the water inside the hot water tank is too cold, the heating assembly in a first step attempts to heat the hot water to the desired temperature. If this cannot be performed, for instance because not enough solar energy is available to the solar panels 3, the storage system 1 can instead be used for heating water placed in a smaller tank placed in conjunction with the heat pump 22 and using that hot water for regular use in the building 6.

The heat pump 22 is continuously operated to retrieve thermal energy from the storage system 1 unless the temperature inside the building 6 is higher than a preset maximum temperature that can be determined by a control system or manually by a person in the building 6.

Also located at the heat pump 22 is a retrieval system to retrieve thermal energy from heated air leaving the building 6 through ventilation. This retrieved energy is used by the heat pump to in the same way that the thermal energy from the storage system 1.

The operation of the storage system 1 and the heating assembly 2 can be controlled by a control unit (not shown) that strives to keep a preset indoor temperature in the building 6 and that controls the storage and retrieval of energy as well as the operation of the heat pump 22, the solar panels 3 and the other components of the heating assembly 2. The control unit can also be two separate control units, one controlling the heat pump and maintaining a desired temperature inside the building 6 and the other controlling the storing of thermal energy into the storage system 1, or can be another number of control units as deemed suitable.

In the preferred embodiment described above, it is assumed that thermal energy is used for heating a building 6 to a desired temperature. It would, however, be possible in a warmer climate to use the same storage system 1 and heating assembly 2 for cooling a building 6 to a desired temperature. The heat pump 22 could then be used for operating an air conditioning assembly, and any excess heat produced by that process could be retrieved for further storage by the storage system 1.

In an especially beneficial embodiment of the invention for cooling a building 6, a cooling system can be used for cooling the storage system 1 to about 15°C during a day period and for cooling the building 6 using a battery operated circulation pump with the storage system 1 during a night period. This is a very suitable embodiment for hot climates, especially desert climates, where a cooling of the building 6 during both day and night can be required for a portion of the year. Thus, during the day, the system is used for cooling the building as well as cooling the storage system 1. During the night, a battery driven system with a circulation pump can cool the building using the storage system 1 and thereby achieve a reliable cooling effect inside the building 6 even where electrical energy is not delivered through the power grid during the night. This aspect of the invention may also be the subject of a separate patent application based on the storage system 1 for use in cooling a building.

Of course, a combination of heating and air conditioning could also be effected by the present invention, for instance by using the thermal energy from the storage system to heat the building 6 during a cold season and cooling the air inside the building during a hot season.

The invention is not to be seen as limited by the preferred embodiments described above, but can be varied within the scope of the appended claims, as will become readily apparent to the person skilled in the art

## Claims

1. A storage system (1) for storing thermal energy for use in heating a building (6), said system comprising
- a cavity (11) with a bottom surface (12), at least one side surface (13) and a top surface (14),
- at least two hoses (71, 72), for transporting a fluid, said at least two hoses (71, 72), being placed inside said cavity (11) and being arranged to be connected to a heating assembly (2) for producing and/or using thermal energy, wherein at least one of which is a storage hose (71) being arranged to transport thermal energy into the system (1) and at least one other being a retrieval hose (72) that is arranged to transport thermal energy from the system (1), and
**characterised in that** said cavity (11) comprises a stone dust material for covering said at least two hoses (7), that only one of said top, side and bottom surfaces (14, 13, 12) is equipped with an insulating layer (15), namely said top surface (14), said at least two hoses (71, 72) are placed in an essentially two-dimensional spiral pattern in said cavity (11) and at essentially the same distance from the top surface (14) of the cavity (11).

2. A storage system according to claim 1, wherein said top surface (14) of the cavity (11) is covered by an insulating cover (15, 16) that is arranged to protrude a distance in every direction from said top surface (14).

3. A storage system according to claim 2, wherein the building (6) is arranged to be placed on said insulating cover (15, 16).

4. A storage system according to any of the previous claims, wherein said bottom surface (12) of the cavity (11) comprises bedrock.

5. A storage system according to any of the previous claims, wherein said cavity (11) is essentially hemispherical in shape and a radius of the top surface (14) is essentially equal to a distance from the top surface (14) to the bottom surface (12).

6. A heating assembly for a building, comprising means for producing thermal energy (3) and means for distributing said thermal energy (22) for heating said building, **characterised in that** said heating assembly comprises a storage system (1) for storing thermal energy according to any of the claims 1-5.

7. A method for manufacturing a storage system for storing thermal energy for use in heating a building, comprising the steps of:
- creating a cavity (11)
- placing at least two hoses (7) for transporting a fluid inside said cavity (11) and connecting said hoses (7) to a heating assembly (2) for producing and/or using thermal energy, and
**characterized by** filling said cavity (11) with a stone dust material in such a way that said hoses (7) are embedded in said stone dust material, only one of said top, side and bottom surfaces (14, 13, 12) is equipped with an insulating layer (15), namely said top surface (14), and placing the at least two hoses (7) in an essentially two-dimensional spiral pattern in said cavity (11) and at essentially the same distance from the top surface (14) of the cavity (11).

8. A method for manufacturing a storage system according to claim 7, further comprising the step of:
- placing an insulating cover (15, 16) over said cavity (11).

9. A method for using a storage system according to any of claims 1-6, comprising storing an amount of thermal energy in said storage system (1) so that a temperature in said storage system (1) is lower than a temperature in a building (6) heated by thermal energy from said storage system (1).

## Patentansprüche

1. Speichersystem (1) zum Speichern thermischer Energie zur Verwendung beim Heizen eines Gebäudes (6), wobei das System umfasst:
- ein Hohlraum (11) mit einer unteren Fläche (12), mindestens einer seitlichen Fläche (13) und einer oberen Fläche (14),
- mindestens zwei Schläuche (71, 72) zum Transportieren eines Fluids, wobei die mindestens zwei Schläuche (71, 72) innerhalb des Hohlraums (11) platziert sind und eingerichtet sind, mit einer Heizbaugruppe (2) zum Erzeugen und/oder Verwenden thermischer Energie verbunden zu werden, wobei mindestens einer von ihnen ein Speicherschlauch (71) ist, der eingerichtet ist, thermische Energie in das System (1) zu transportieren und mindestens ein anderer ein Zurückgewinnungsschlauch (72) ist, der eingerichtet ist, thermische Energie aus dem System (1) zu transportieren, und
**dadurch gekennzeichnet, dass** der Hohlraum (11) ein Gesteinsstaubmaterial zum Abdecken der mindestens zwei Schläuche (7) umfasst, dass nur eine der oberen, seitlichen und unteren Flächen (14, 13, 12) mit einer Isolierungsschicht (15) ausgestattet ist, nämlich die obere Fläche (14), wobei die mindestens zwei Schläuche (71, 72) in einem im Wesentlichen zweidimensionalen Spiralmuster in dem Hohlraum (11) und im Wesentlichen im gleichen Abstand von der oberen Fläche (14) des Hohlraums (11) platziert sind.

2. Speichersystem gemäß Anspruch 1, wobei die obere Fläche (14) des Hohlraums (11) durch eine isolierende Abdeckung (15, 16) abgedeckt ist, die eingerichtet ist, um einen Abstand in jeder Richtung von der oberen Fläche (14) hervorzustehen.

3. Speichersystem gemäß Anspruch 2, wobei das Gebäude (6) eingerichtet ist, auf der isolierenden Abdeckung (15, 16) platziert zu werden.

4. Speichersystem gemäß einem der vorhergehenden Ansprüche, wobei die untere Fläche (12) des Hohlraums (11) anstehendes Grundgestein umfasst.

5. Speichersystem gemäß einem der vorhergehenden Ansprüche, wobei der Hohlraum (11) im Wesentlichen halbkugelförmig ist und ein Radius der oberen Fläche (14) im Wesentlichen gleich einem Abstand von der oberen Fläche (14) zu der unteren Fläche (12) ist.

6. Heizbaugruppe für ein Gebäude, umfassend Mittel zum Erzeugen thermischer Energie (3) und Mittel zum Verteilen der thermischen Energie (22) zum Heizen des Gebäudes, **dadurch gekennzeichnet, dass** die Heizbaugruppe ein Speichersystem (1) zum Speichern thermischer Energie gemäß einem der Ansprüche 1-5 umfasst.

7. Verfahren zum Herstellen eines Speichersystems zum Speichern thermischer Energie zur Verwendung beim Heizen eines Gebäudes, umfassend die Schritte von:
- Erschaffen eines Hohlraums (11)
- Platzieren von mindestens zwei Schläuchen (7) zum Transportieren eines Fluids in den Hohlraum (11) und Verbinden der Schläuche (7) mit einer Heizbaugruppe (2) zum Erzeugen und/oder Verwenden thermischer Energie, und
**gekennzeichnet durch** Füllen des Hohlraums (11) mit einem Gesteinsstaubmaterial auf solche Weise, dass die Schläuche (7) in Gesteinsstaubmaterial eingebettet werden, wobei nur eine der oberen, seitlichen und unteren Flächen (14, 13, 12) mit einer Isolierungsschicht (15) ausgestattet wird, nämlich die obere Fläche (14), und Platzieren der mindestens zwei Schläuche (7) in einem im Wesentlichen zweidimensionalen Spiralmuster in dem Hohlraum (11) und im Wesentlichen im gleichen Abstand von der oberen Fläche (14) des Hohlraums (11).

8. Verfahren zum Herstellen eines Speichersystems gemäß Anspruch 7, weiterhin umfassend den Schritt von:
- Platzieren einer isolierenden Abdeckung (15, 16) über dem Hohlraum (11).

9. Verfahren zum Verwenden eines Speichersystems gemäß einem der Ansprüche 1-6, umfassend Speichern einer Menge an thermischer Energie in dem Speichersystem (1), sodass eine Temperatur in dem Speichersystem (1) geringer ist als eine Temperatur in einem Gebäude (6), das durch thermische Energie von dem Speichersystem (1) geheizt wird.

## Revendications

1. Un système de stockage (1) pour stocker de l'énergie thermique destinée à être utilisée pour chauffer un bâtiment (6), ledit système comprenant
- une cavité (11) avec une surface inférieure (12), au moins une surface latérale (13) et une surface supérieure (14),
- au moins deux tuyaux (71, 72) pour transporter un fluide, lesdits au moins deux tuyaux (71, 72) étant placés à l'intérieur de ladite cavité (11) et étant agencés pour être connectés à un ensemble de chauffage (2) pour produire et/ou utiliser de l'énergie thermique, au moins l'un d'eux étant un tuyau de stockage (71) qui est agencé pour transporter de l'énergie thermique dans le système (1) et au moins un autre étant un tuyau d'extraction (72) qui est agencé pour transporter l'énergie thermique provenant du système (1), et
**caractérisé en ce que** ladite cavité (11) comprend un matériau en poussière de pierre pour recouvrir lesdits au moins deux tuyaux (7), **en ce que** l'une uniquement parmi lesdites surfaces supérieure, latérale et inférieure (14, 13, 12) est équipée d'une couche isolante (15), notamment ladite surface supérieure (14), et lesdits au moins deux tuyaux (71, 72) sont placés dans ladite cavité (11) selon une configuration en spirale essentiellement bidimensionnelle et à sensiblement la même distance de la surface supérieure (14) de la cavité (11).

2. Un système de stockage selon la revendication 1, dans lequel ladite surface supérieure (14) de la cavité (11) est recouverte par un couvercle isolant (15, 16) qui est agencé pour faire saillie sur une distance s'étendant dans toutes les directions depuis ladite surface supérieure (14).

3. Un système de stockage selon la revendication 2, dans lequel le bâtiment (6) est agencé pour être placé sur ledit couvercle isolant (15, 16).

4. Un système de stockage selon l'une quelconque des revendications précédentes, dans lequel ladite surface inférieure (12) de la cavité (11) comprend un socle.

5. Un système de stockage selon l'une quelconque des revendications précédentes, dans lequel ladite cavité (11) est essentiellement de forme hémisphérique et un rayon de la surface supérieure (14) est essentiellement égal à une distance allant de la surface supérieure (14) à la surface inférieure (12).

6. Un ensemble de chauffage pour un bâtiment, comprenant des moyens pour produire de l'énergie thermique (3) et des moyens pour distribuer ladite énergie thermique (22) pour chauffer ledit bâtiment, **caractérisé en ce que** ledit ensemble de chauffage comprend un système de stockage (1) pour stocker de l'énergie thermique selon l'une quelconque des revendications 1 à 5.

7. Un procédé de fabrication d'un système de stockage pour stocker de l'énergie thermique destinée à être utilisée pour chauffer un bâtiment, comprenant les étapes consistant à :
- créer une cavité (11)
- placer au moins deux tuyaux (7) pour transporter un fluide à l'intérieur de ladite cavité (11) et connecter lesdits tuyaux (7) à un ensemble de chauffage (2) pour produire et/ou utiliser de l'énergie thermique, et **caractérisé par** le fait de remplir ladite cavité (11) avec un matériau en poussière de pierre de telle manière que lesdits tuyaux (7) sont noyés dans ledit matériau en poussière de pierre, une surface uniquement parmi lesdites surfaces supérieure, latérale et inférieure (14, 13, 12) étant équipée d'une couche isolante (15), notamment ladite surface supérieure (14), et par le fait de placer lesdits au moins deux tuyaux (7) dans ladite cavité (11) selon un motif en spirale essentiellement bidimensionnel et à sensiblement la même distance de la surface supérieure (14) de la cavité (11).

8. Un procédé de fabrication d'un système de stockage selon la revendication 7, comprenant en outre l'étape consistant à :
- placer un couvercle isolant (15, 16) sur ladite cavité (11).

9. Un procédé d'utilisation d'un système de stockage selon l'une quelconque des revendications 1 à 6, comprenant le fait de stocker une quantité d'énergie thermique dans ledit système de stockage (1) de sorte qu'une température dans ledit système de stockage (1) est inférieure à une température dans un bâtiment (6) chauffé par énergie thermique provenant dudit système de stockage (1).
